## Europäisches Patentamt

(19) **European Patent Office**

**Office européen des brevets**

(11) Publication number : **0 235 525 B1**

## (12) EUROPEAN PATENT SPECIFICATION

(45) Date of publication of patent specification :
05.07.95 Bulletin 95/27

(51) Int. Cl.⁶ : **G06F 17/30, G06F 17/18**

(21) Application number : **87100704.3**

(22) Date of filing : **20.01.87**

(54) Statistical information access system.

(30) Priority : **14.02.86 US 829730**

(43) Date of publication of application :
**09.09.87 Bulletin 87/37**

(45) Publication of the grant of the patent :
**05.07.95 Bulletin 95/27**

(84) Designated Contracting States :
**DE FR GB IT**

(56) References cited :
S.P. GHOSH 'RESEARCH REPORT' 10 March
1985, IBM RESEARCH DIVISION COMPUTER
SCIENCE, SAN JOSE, US
AFIPS CONFERENCE PROCEEDINGS 1981
NATIONAL COMPUTER CONFERENCE 4 May
1981, CHICAGO, US pages 453-457; R.
BROOKS ET AL.: 'Using partitioned databases
for statistical data analysis'

(73) Proprietor : **International Business Machines
Corporation
Old Orchard Road
Armonk, N.Y. 10504 (US)**

(72) Inventor : **Ghosh, Sakti Pada
1381 Echo Valley Drive
San Jose California 95120 (US)**
Inventor : **Lorie, Raymond Amand Charles
1272 Echo Valley Drive
San Jose California 95120 (US)**

(74) Representative : **Burt, Roger James, Dr.
IBM United Kingdom Limited
Intellectual Property Department
Hursley Park
Winchester Hampshire SO21 2JN (GB)**

## Description

The present invention relates to data access methods and physical data organizations or structures for implementing the access methods. In particular, the present invention provides a structure facilitating accesses to data for statistical processing.

Database management systems (DBMS) have many important components, such as a data model, a data definition language, a data manipulation language, a query language, data access methods, a query optimizer, a concurrency and locking mechanism, etc. All of these components contribute to the desired properties of a database management system. Most of the fundamental concepts of database management system are described in any standard text book on DBMS: See, Ghosh S., Data Base Organization for Data Management, Published by Academic Press, New York (1977); Date C. J., An Introduction to Database Systems, Published by Addison-Wesley, Reading, Mass. (1977); Wiederhold G., Database Design, Published by McGraw-Hill, New York (1977).

Many DBMS product descriptions are available in the manuals provided by the different commercial vendors. DBMS products based on a relational model have been developed and an excellent summary of some of these products has been given by Kim W., "Relational Database Systems," Computing Survey, Published by ACM., Vol. 11, No. 3, pp. 185-211 (1979).

Among the components of a DBMS, the access methods and structures for implementing the methods are responsible for organizing the bits and bytes of the data on the storage media and servicing I/O requests from a host processor.

Many excellent access methods like ISAM (System 360 Operating System, Index Sequential Access Methods (Programming Logic), IBM Form Y28-6618 (1975a)) based on index sequential search, VSAM (OS/VS Virtual Storage Access Method (VSAM) Programmer's Guide, IBM Form GC26-3838 (1975b)) based on B-trees (Bayer R. and McCreight C., "Organization and Maintenance of Large Ordered Indexes", Acta. Inf. Vol. 1, No. 3, pp. 173-189 (1972)) were invented to expedite the searching of information contained in files stored in a computer. These access methods have succeeded in reducing significantly, the search time involved in retrieving information from a database.

All of these prior art access methods have been designed to expedite logical processing of information, e.g. find a record with key equal to xxx, or find all records which satisfy the predicate P(A), or update the records with attribute A having the value xxxx, etc. There are many other search techniques (Knuth D., The Art of Computer Programming, Vols. 1, 2, 3, Published by Addison-Wesley Publ. Co., Reading, Mass. (1968)), other than those which have been implemented in commercial access methods, but all of them have been designed to make the logical processing of information efficient. If the mean value of an attribute is to be calculated from the records organized by any of the existing access methods, all the records in the file have to be processed, which is very time consuming.

In general, statistical processing of information, such as the computation of the mean, is slow in systems designed for logical processing.

There are various types of statistical processing of information (Kendall M. G. & Stuart A., The Advance Theory of Statistics, Vol. 1, Published by Charles Griffin & Company, London (1958); and Kendall M. G. & Stuart A., The Advance Theory of Statistics, Vol. 2, Published by Hafner Publishing Co. New York, (1961)). Most of them have to deal with computing some numerical function based on values of many individuals, usually all the individuals (records) of the file. This makes statistics computation, time consuming.

Examples of statistics computation are: estimation of parameters, curve fitting, statistical summarization (calculation of frequency distributions, moments, tabular representation, etc), statistical testing of hypothesis sampling, statistical design of experiments, statistical measures of associations statistical prediction, etc. It should be noted that the final results of statistical processing of information are numbers having an accuracy or precision associated with them.

A fundamental element associated with statistical processing of information is the time needed for processing. One of the major goals of computer science is to minimize the processing time. Usually this is achieved by trading with a requirement for storage space. In statistical computation, precision is another fundamental element that can be traded to minimize time.

A statistical access method is described in Gosh S. "Statistics Information Access Method" Computer Science, IBM Research Division, San Jose, Research Report (dated 10/3/85), pages 1-20. In this article, a data access structure is disclosed which facilitates the processing of statistical queries concerning records stored in the data structure. The article does not give detailed consideration to the updating of statistical information contained in the structure.

In recognition of this ability to trade off time, space and precision in statistical queries, the present invention provides a data processing system which facilitates the processing of statistical queries concerning records

2

stored in a data access structure.

According to the present invention there is provided a data processing system for maintaining a data access structure which facilitates the processing of statistical enquiries relating to data records stored in said structure, the system comprising: means for maintaining, in a data storage medium, a plurality of data nodes each storing a subset of the data records, and a plurality of access nodes, each including a pointer to, or identifier of, another access node or a data node, each access node being linked directly or indirectly to at least one of the data nodes; means for maintaining statistical information associated with said access and data nodes, the statistical information associated with an access node being related collectively to the data records stored in one or more data nodes to which the access node is directly or indirectly linked; said maintaining means including updating means, responsive to a change in the data records stored in said data nodes to update the statistical information associated therewith and for updating the statistical information associated with the access node to which the data nodes are directly linked; characterised in that: the updating means is responsive to a change in a data record stored in a selected data node to recalculate the statistical information associated therewith; and to determine the change in value of said selected data node statistical information caused by said data record change; said updating means being responsive to a determination that said change in value exceeds a predetermined threshold to combine said recalculated data node statistical information with the statistical information associated with the access node to which said selected data node is directly linked, thereby updating said selected access node statistical information.

The present invention is suitable for implementation with a wide variety of hierarchical and non-hierarchical access methods, including those based on the B-tree, ISAM, RRDS (Relative Record Data Set) of IBM VSAM, and HDAM of IBM IMS.

By maintaining statistical information in association with access nodes in a data access structure, statistical queries can be resolved by reading the statistical information from a subset of the nodes in the access structure, vastly saving in the amount of access time necessary to process the statistical queries. For queries requiring greater precision, the user can proceed all the way down the access structure to the actual records, so no information is lost. In addition, the means for updating the statistical informa tion can be adapted to maintain the precision desired at any level in the structure.

The present invention is defined in the attached claims and will now be more closely described with reference to the accompanying drawings, where

FIG. 1 is a simplified overview block diagram showing the elements of a database system,

FIG. 2 is a diagram of a data access structure according to the present invention,

FIG. 3 is a diagram of an alternative means for associating statistical information with the nodes in a structure such as is shown in FIG. 2,

FIGS. 4A AND 4B are charts showing the structure of an access node and of a data node respectively, according to one embodiment of the present invention,

FIG. 5 is a diagram of a B-tree access structure implemented according to the present invention,

FIG. 6 is a diagram utilized for illustrating the steps in updating statistical information associated with access nodes in the access structure, and

Fig. 7 is a diagram illustrating the effects of node splitting after the insertion of a new data page in a B-tree structure implemented according to the present invention.

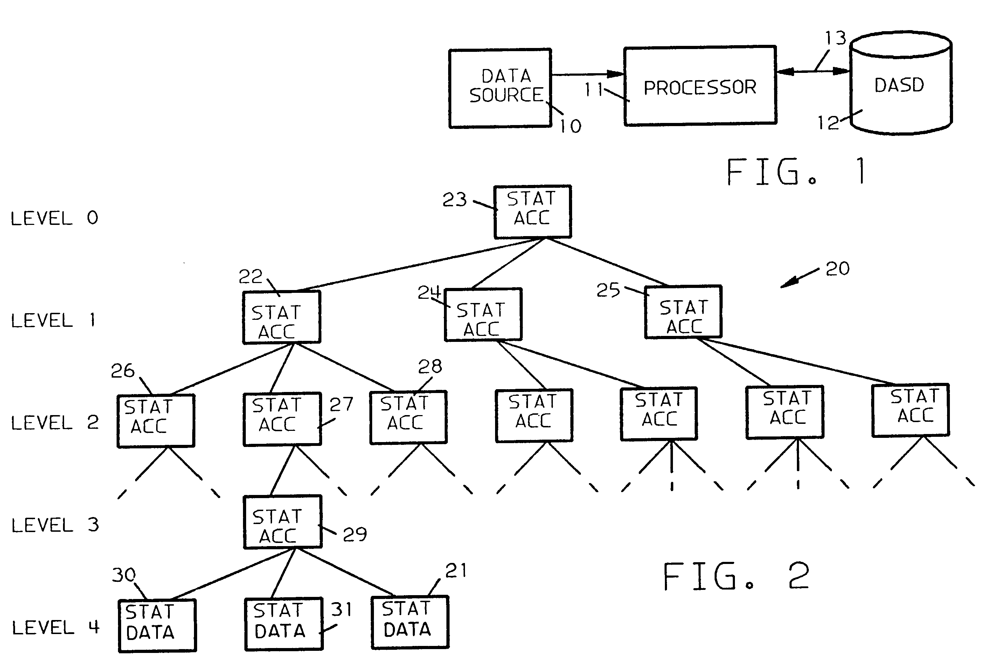

Fig. 1 is a simplified diagram of a data processing system that might implement the present invention. The data processing system includes a data source 10 such as a communication channel or a human operated keyboard. The data source 10 communicates with a processor 11 for process ing the data according to user specifications. The processor 11 typically communicates with a direct access storage device 12 (DASD). The direct access storage device 12 maintains data provided by the processor 11 in nonvolatile storage. The processor 11 organizes the data according to an access structure and provides control information across the channel 13.

The system illustrated in FIG. 1 is vastly simplified for the purposes of description. The present invention is concerned with the organization of the data on the DASD 12 as it is maintained by the processor 11. The typical systems may include multiple processors and large numbers of storage devices.

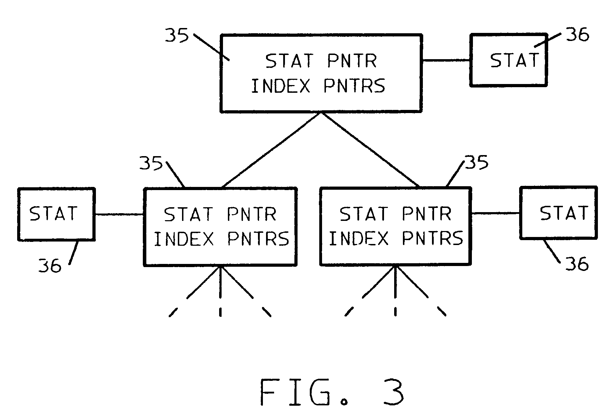

Fig. 2 illustrates a data access structure 20 according to the present invention for facilitating the processing of statistical queries concerning records stored in the structure. The data records are stored in a plurality of data nodes, such as data node 21. The access structure 20 also includes a plurality of access nodes, such as access node 22. Each of the access nodes stores access information ACC such as at least one pointer to or identifier of another access node or a data node. The access nodes are organized so that each access node is associated with at least one data node in the structure. The pointers are represented in FIG.2 by lines from an access node to another access node or from an access node to a data node. According to the present invention, statistical information STAT is associated with a subset of the plurality of access nodes and data nodes

3

concerning the records stored in the data node or data nodes associated with respective access node.

The structure shown in FIG. 2 includes a plurality of levels, labeled level 0 through level 4. This level description can be generalized into series notation indicating each level as level i, where i goes from 0 to n. In the implementation shown in FIG. 2, n is equal to 4. Level 0 is a root access node 23 storing pointers to the access nodes 22, 24 and 25 in level 1.

The access nodes in level i each have pointers to a subset of the access nodes in the level i + 1 for i equal to 1 through n - 1. Thus access node 22 in level 1 stores pointers to access nodes 26, 27 and 28 in level 2. Access node 27 in level 2 includes pointers to access node 29 and possibly other access nodes in level 3.

The access node 29 in level 3 stores pointers to the data nodes 21, 30 and 31 in level 4.

Thus it can be seen that level n stores data nodes in which actual records are maintained.

The statistical information is associated with a subset of the access nodes and data nodes. In the embodiment shown in FIG. 2, the subset includes all of the access nodes and data nodes that make up the data access structure 20. The user could adapt the invention to maintain statistical information for instance in only one level of the structure, depending on the desired trade offs between storage space, precision and access time.

As shown in FIG. 2, the statistical information is stored in a record contained in the access nodes in the storage device, so that a single access to an access node will provide statistical information as well as pointers leading through the access structure to the actual data.

FIG. 3 illustrates an alternative means for associating the statistical information with the access nodes. In particular, the access nodes, such as node 35 in FIG. 3, store a pointer to the statistical information STAT PNTR as well as index pointers INDX PNTRS to the access nodes in the structure. The statistical information STAT is stored in the storage device at a location 36 indicated by the statistical pointer STAT PNTR. This alternative means saves space in the access structure but costs an additional access for the purpose of processing a statistical query associated with the access nodes.

In an access structure such as is shown in FIG. 2, in which the data nodes also have statistical information associated with them, statistical pointers such as shown in FIG. 3 can be used to associate the statistical information with data nodes.

The access structure such as shown in FIG. 2 can be stored on a few successive cylinders in a disk drive such as DASD 12 as shown in FIG. 1. The data nodes are stored in the data storage system at the locations indicated by the access structure. The statistical information can be stored with the access structure as is described with reference to FIG. 2 in the same cylinders and at the same address as a particular access node with which the statistical information is associated. Alternatively, the statistical information can be stored in a few adjacent cylinders to the access structure itself with pointers in the access structure to the associated statistical information.

As mentioned above, the processor 11 shown in FIG. 1 operates to maintain the access structure, such as the hierarchical structure 20 shown in FIG. 2, as the records stored in the data nodes are inserted, changed or deleted. One well known method for maintaining an access structure is called the B-tree. A good description of the B-tree data organization is provided in Jeffrey D. Ullman, Principles of Database Systems, second edition, Computer Science Press (1982), pages 58-65. According to the present invention, the processor 11 further maintains a statistical information STAT in the hierarchical data structure 20 during execution.

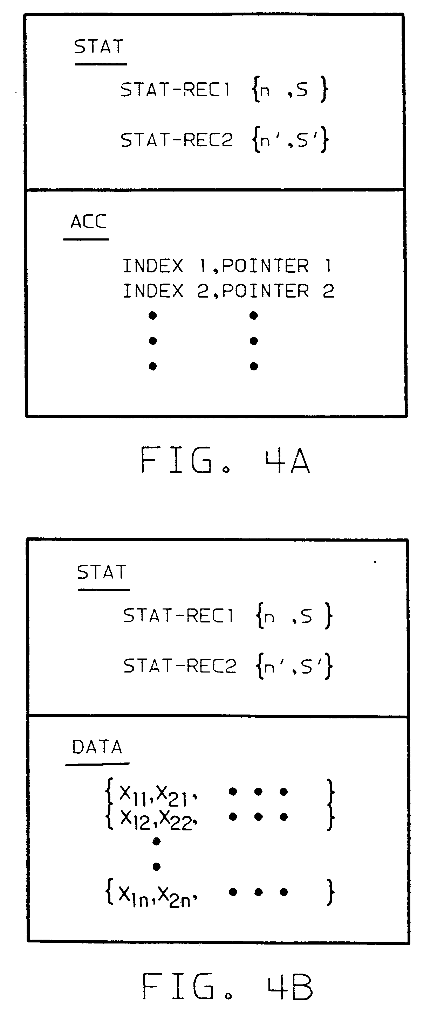

FIGS. 4A and 4B illustrate the format of an access node and of a data node, respectively, according to the present invention. FIG. 4A illustrates an access node. The statistical information STAT maintained is the number of records n that are stored in data nodes with which the particular access node is associated, and for example the summation S of an attribute X of each of the n records. The statistical information can also include such things as the summation of the squares of X, the median, the mode, frequency distributions over n, multivariate statistics or other information that facilitates the processing of statistical queries likely to be processed using the database.

The statistical information STAT is maintained in a form including STAT-REC1 and STAT-REC2. STAT-REC1 maintains current statistical information for the access node. STAT-REC2 stores the last promoted version of the statistical information, designated n', and the summation S' of the attribute X for k = 1 to n'. So in a hierarchical structure, STAT-REC1 for a given node on level i is generated from the STAT-REC2 values from the nodes in level i+1 associated with the given node. The use of the last promoted version STAT-REC2 is described below with reference to the method for maintaining the statistical information in the access structure.

The access information ACC leading through the access structure is stored in a second part of the access node shown in FIG. 4A. In an access structure based on a hierarchical index, such as the B-tree, the access information ACC includes associated with each pointer an index value such as index 1, pointer 1. The index identifies, for instance, a maximum value or a range of values for the records stored in data nodes associated with nodes down the hierarchical structure pointed to by pointer 1. Likewise, the second entry in the access node includes index 2 and pointer 2, and so on according to the access structure.

Fig. 4B illustrates the organization of a data node. The statistical information STAT in the data node in the preferred embodiment also maintains the current statistical information STAT-REC1 and the last promoted version STAT-REC2. STAT-REC1 is calculated in response to actual changes in the record in the data node. The data is maintained in tables which associate p attributes $X_{1k}$, $X_{2k}$, ..., $X_{pk}$ with each record k, for k equal to 1 to n. In the data node shown in FIG. 4B, STAT-REC1 stores n which identifies the number of data records maintained in the data node. Thus a plurality of records are stored in the data section of the data node which have the attribute $X_{jk}$, for j going from 1 to p and k going from 1 to n.

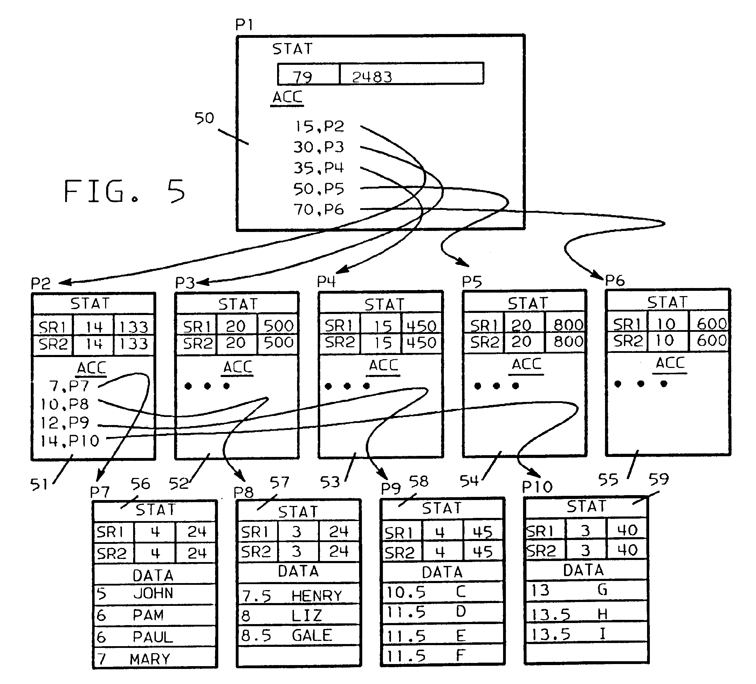

FIG. 5 provides an example of a 3 level B-tree data structure having statistical information according to the present invention organized as shown with reference to FIGS. 4A and 4B. The root access node 50 in level 0 maintains only one copy of the statistical information, n and summation S as k goes from 1 to n of the values of attribute $X_{1k}$. The access information associated with the root access node 50 includes an indicator of the range of values (the maximum value in the example shown) of the attribute by which the access structure is organized in its child nodes and a pointer to or other identifier of a location of an access node in level 1.

In the embodiment shown in FIG. 5 there are five pointers in the root node 50 which point to pages P2, P3, P4, P5 and P6 all in level 1 as indicated by the arrows. The access nodes 51, 52, 53, 54, 55 in level 1 store a current copy of the statistical information STAT-REC1 designated SR1 in the figure and a copy of the last promoted version STAT-REC2 designated SR2 in the figure. It can be seen that the number n stored in P1, the root access node 50, is equal to the sum of the values of n′ stored in the last promoted version SR2 of the statistical information for the access nodes in level 1. Thus 79 is equal to the sum of 14, 20, 15, 20 and 10. Furthermore, the value of the summation S of $X_{1k}$ stored in the root access node 50 is equal to the sum of the last promoted versions S′ from SR2 in the access nodes in level 1.

Each of the access nodes in level 1 includes pointers to data nodes. In the figure only the pointers from access node 51 labeled P2 are provided for the purpose of description. As can be seen, there are four pointers in access node 51, pointing to pages P7, P8, P9 and P10 respectively. The statistical information stored in SR1 in the access node 51 is a summary of the statistical information stored in the data nodes 56, 57, 58, 59 stored in pages P7, P8, P9 and P10 respectively. In particular, it is the sum of the last promoted versions SR2 stored in data nodes. Thus 14 is equal to the sum of 4, 3, 4 and 3. 133 is the sum of 24, 24, 45 and 40.

When the data record is set up or in steady state, the last promoted version SR2 of a statistical information is identical to the current version SR1. Thus, that is shown in the example shown in FIG. 5.

In order to calculate the mean using an access structure such as shown in FIG. 5, the user must retrieve the values n (the number of records) and S (the summation of the values of the attribute $X_{1k}$) from the root access node. The mean equals S/n, or in the example 2483/79.

In order to compute the mean of an attribute stored in the access structure shown in FIG. 5, the root access node 50 is accessed and the statistical information, n and S, is retrieved. The mean is equal to S/n or 2483/79. If data records have been changed so that the values of SR1 and SR2 in the nodes in level 2 differ, then the statistical information stored in SR1 in the level 2 nodes could be retrieved for more precision.

The algorithm for computation of the median set out below illustrates the computation of a statistical query based on sorting according to the present invention.

```
Median Calculation:
        GET n from STAT-REC in root page
        SET m₀ = [(n+1)/2]
        SET m = 0
        SET P = pointer to root access node
        DO WHILE (P points to an access node)
                CALL SUBROUTINE (m,m₀,P)
                SUBROUTINE:  PROC (m,m₀,P)
                DO WHILE m < m₀
                        Scan in ascending order the STAT-REC2 in
                                pages pointed to by the
                                indices in the scanned access node.
                        SET P to pointer of node examined;
                        SET m = m + n (from STAT-REC of node);
                END DO LOOP;
                SET m = m - n (from root node);
                END SUBROUTINE
        END DO LOOP
        GO TO the (m₀ - m)th data record in node pointed to by
                P.  The median is equal to the value of the
                Attribute from the retrieved record.
        END
```

So for the example shown in FIG. 5, the median is calculated as follows:

$m_0 = (79 + 1)/2 = 40$;
For $P = P2$, $m = 0 + 14 = 14$;
For $P = P3$, $m = 14 + 20 = 34$;
For $P = P4$, $m = 34 + 15 = 49$;
Since $49 > 40$, set $m = 49 - 15 = 34$;
$m_0 - m = 40 - 34 = 6$;
The median is equal to the value of the attribute in the 6th record in P4.

The statistical information is maintained in the B-tree in response to changes in the records stored in the data nodes. Software in the processor 11 associated with the storage facility maintains the statistical information in the preferred embodiment as it is described below.

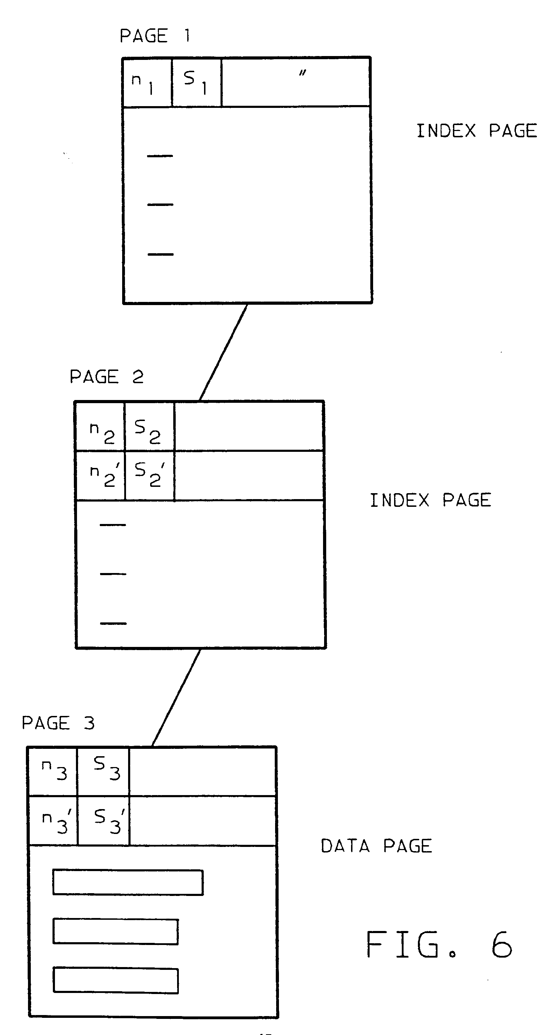

Fig. 6 illustrates two index pages, page 1 and page 2 and a data page, page 3, in a hierarchical structure such as is shown in FIG. 2. Page 1 is the root access node storing $n_1$ and $S_1$. Page 2 is an access node storing in SR1 $n_2$ and $S_2$ and in SR2 $n'_2$ and $S'_2$. In the data node page 3, $n_3$ and $S_3$ are stored in SR1 and $n'_3$ and $S'_3$ in SR2.

When a new record is added to the data page, STAT-REC2 of the data page is updated. Suppose one record having value V of attribute X is added to page 3; thus the new values of $n'_3$ and $S'_3$ are:

$$n'_3 = n'_3 + 1;$$
$$S'_3 = S'_3 + V;$$

The algorithm for updating the statistical information in response to the addition of a new record in a data node is outlined as follows:

```
DO while (add new record having value V);
```

$$n'_3 = n'_3 + 1;$$
$$S'_3 = S'_3 + V;$$

```
If (n'_3 - n_3)/n_3 > threshold; or
```

$$(S'_3 - S_3)/S_3 > threshold$$

```
Then DO; n'_2 = n'_2 + n'_3 - n_3; S'_2 = S'_2 + S'_3 - S_3;
         n_3 = n'_3 ; S_3 = S'_3 ; END DO Loop;
END;
```

The same algorithm can be applied to either an access node or a data node.

The deletion algorithm is the same as update algorithm except for deletion of a record having value D of attribute X the values of the statistical information $n'_3$ and $S'_3$ are updated as follows:

$$n'_3 = n'_3 - 1$$

and

$$S'_3 = S'_3 - D;$$

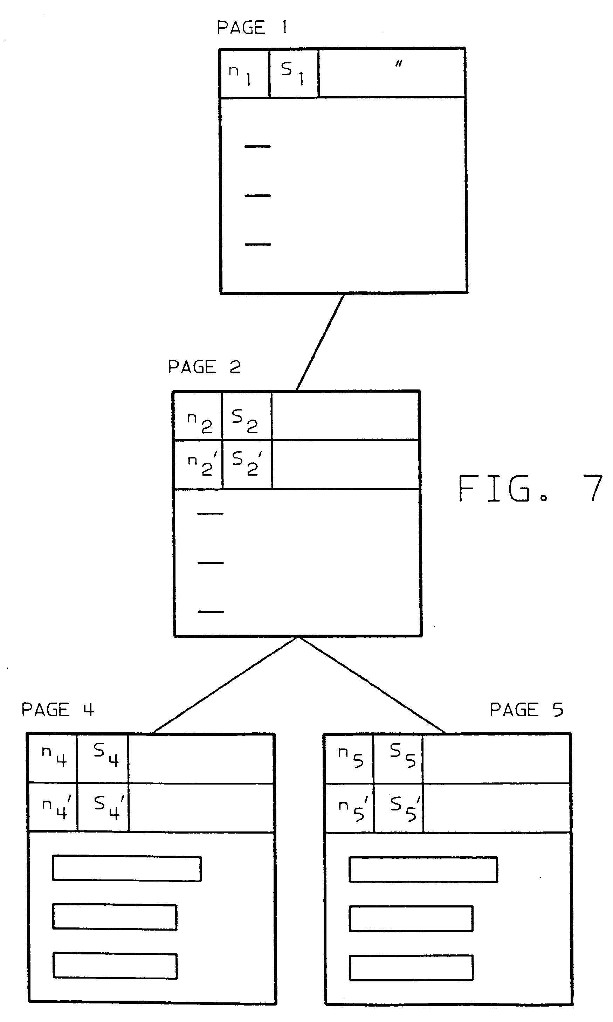

Suppose a record is inserted in page 3 which results in a split into two pages, page 4 and page 5, as shown in FIG. 7 as in a B-tree split:

$n'_3$ is split into $n_4$ and $n_5$

$S'_3$ is split into $S_4$ and $S_5$; such that

$$n'_3 = n_4 + n_5$$
$$S'_3 = S_4 + S_5$$

In the insertion algorithm the formula for the $n'_2$ and $S'_2$ will be the same if calculated using $n'_3$ and $S'_3$. If the parameters of pages 4 and 5 are used, then new formulas are:

$$n'_2 = n'_2 + n_4 + n_5 - n_3$$
$$S'_2 = S'_2 + S_4 + S_5 - S_3$$

Updating is a combination of insertion and deletion; the updating algorithm will be a combination of the insertion algorithm and deletion algorithm as discussed before.

By selecting the threshholds involved in the updating algorithm described above, the user is able to trade off precision in the statistical information against the time required to maintain the information current. The threshholds may have different values for the different kinds of statistical information maintained and for the different levels in the access structure. The following example is provided to illustrate how threshholds may be selected for statistical information involving the mean of an attribute X.

Suppose the mean M before update is given by $(S_1 + S_2 + ... + S_k)/n$.

Suppose in the updating of records stored in one or more data nodes, the summation entries $S_{k-j}, S_{k-j+1},...,S_k$ are changed in the data pages to $S'_{k-j}, S'_{k-j+1},..., S'_k$.

Then the true mean $M_U$ after the update can be expressed as follows:

$$M_U = (S_1 + S_2 + ... + S_{k-j-1} + S'_{k-j} + S'_{k-j+1} + ... + S'_k)/(n_1 + n_2 + ... + n_{k-j-1} + n'_{k-j}$$
$$+ n'_{k-j+1} + ... + n'_k)$$
$$= (M + e_s/n)/(1 + e_n/n);$$
$$= (M + e_s/n) (1 - e_n/n)^{-1};$$

where $e_s = (S'_{k-j}-S_{k-j}) + (S'_{k-j+1}-S_{k-j+1}) +...+ (S'_k-S_k)$ and $e_n = (n'_{k-j}-n_{k-j}) + (n'_{k-j+1}-n_{k-j+1}) +...+ (n'_k-n_k)$.

$M_U$ can then be approximated by:

$$M_U = (M + e_s/n) (1 - e_n/n);$$
$$= M + e_s/n - M(e_n/n) - (e_s \cdot e_n)/n^2$$

Thus when the mean M prior to an update is used as an estimate of the true mean $M_U$ after the update has occurred then the relative error E can be expressed as follows:

$$E = e_s/nM - e_n/n - (e_s \cdot e_n)/Mn^2$$

Thus if the threshold for the error in the sums $e_s$ is selected to equal $\alpha_s$ and for the error in the counts $e_n$ to equal $\alpha_n$, then the impact of the selected threshhold on the estimate of the mean from the STAT-REC stored in the root node can be expressed as follows:

$$\alpha_s/nM - \alpha_n/n - \alpha_n\alpha_s/Mn^2.$$

So as a practical rule we can set much higher threshold limits for "the sums" and lower threshold limits for "the counts" in the data nodes than in the access nodes. Thus we can set a threshold of 10% relative errors in the sums and 1% relative errors for the count in the data nodes. The threshold in the next higher level of access nodes for the sums can be set at 8% or 9% and for the count can be set at 2% or 3%. This process can be repeated through the chain of the access nodes. Thus for 5 or 6 levels of indexing, the threshold for the count in the root node could be as high as 10% and for the sums as low as 1% according to this example.

As in the example discussed above for the calculation of the mean of an attribute $X_{1k}$, the preferred embodiment maintains statistical information upon which the access structure is organized. In other embodiments the statistical information can contain statistics from any other attribute of the records, or from combinations of attributes.

## Claims

1. A data processing system for maintaining a data access structure which facilitates the processing of statistical enquiries relating to data records stored in said structure, the system comprising:

   means for maintaining, in a data storage medium, a plurality of data nodes (e.g. 21) each storing a subset of the data records, and a plurality of access nodes (e.g. 23-28), each including a pointer to, or identifier of, another access node or a data node, each access node being linked directly or indirectly to at least one of the data nodes;

   means for maintaining statistical information (SR1, SR2) associated with said access and data nodes, the statistical information associated with an access node being related collectively to the data records stored in one or more data nodes to which the access node is directly or indirectly linked; said maintaining means including updating means, responsive to a change in the data records stored in said data nodes to update the statistical information associated therewith and for updating the statistical information associated with the access node to which the data nodes are directly linked; characterised in that:

   the updating means is responsive to a change in a data record stored in a selected data node to recalculate the statistical information associated therewith; and to determine the change in value of said selected data node statistical information caused by said data record change; said updating means being responsive to a determination that said change in value exceeds a predetermined threshold to combine said recalculated data node statistical information with the statistical information associated with the access node to which said selected data node is directly linked, thereby updating said selected access node statistical information.

2. A data processing system as claimed in claim 1, wherein the maintaining means maintains the access and data nodes in the form of a multi-level B-tree.

3. A data processing system as claimed in claim 1 or claim 2, further including means for associating the statistical information with the respective nodes, said means having a storage location storing the statistical information; and a pointer in the respective node to the storage location.

4. A data processing system as claimed in claim 3, wherein the means for associating the statistical information with the respective nodes includes a storage location in the respective node for the statistical information.

## Patentansprüche

1. Ein Datenverarbeitungssystem zur Verwaltung einer Datenzugriffsstruktur, die die Verarbeitung statistischer Abfragen von in der Zugriffsstruktur gespeicherten Datensätzen erleichtert, bestehend aus:

   einem Mittel zur Verwaltung mehrerer Datenknoten (z.B. 21) auf einem Speichermedium, wobei in jedem Datenknoten eine Untergruppe von Datensätzen gespeichert ist, sowie zur Verwaltung mehrerer Zugriffsknoten (z.B. 23-28), wobei jeder Zugriffsknoten einen Zeiger auf einen anderen Zugriffs- oder Datenknoten oder eine Kennung eines anderen Zugriffs- oder Datenknotens enthält und jeder Zugriffsknoten direkt oder indirekt mit mindestens einem Datenknoten verbunden ist;

   einem Mittel zur Verwaltung der statistischen Informationen (SR1, SR2), die den Zugriffs- und Datenknoten zugeordnet sind, wobei sich die einem Zugriffsknoten zugeordnete statistische Information kollektiv auf die Datensätze bezieht, die in einem oder mehreren Datenknoten gespeichert sind, mit denen der Zugriffsknoten direkt oder indirekt verbunden ist; wobei das Mittel zur Verwaltung ein Mittel zur Aktualisierung beinhaltet, das nach einer Änderung von in den Datenknoten gespeicherten Datensätzen die zugehörigen statistischen Informationen sowie die statistischen Informationen des Zugriffsknotens, mit dem die Datenknoten direkt verbunden sind, aktualisiert; gekennzeichnet dadurch, daß das Aktualisierungsmittel nach einer Änderung eines in einem ausgewählten Datenknoten gespeicherten Datensatzes die zugehörigen statistischen Informationen neu berechnet und die durch die Änderung des Datensatzes bedingte Wertänderung der statistischen Information des ausgewählten Datenknotens ermittelt; wobei das Aktualisierungsmittel bei der Feststellung, daß die Wertänderung einen vorgegebenen Schwellenwert überschreitet, die neuberechneten statistischen Informationen der Datenknoten mit den statistischen Informationen in den Zugriffsknoten, mit denen der ausgewählte Datenknoten direkt verbunden ist, kombiniert und auf diese Weise die statistische Information des ausgewählten Zugriffsknotens aktualisiert.

**2.** Ein Datenverarbeitungssytem gemäß Anspruch 1, in dem das Verwaltungsmittel die Zugriffs- und Datenknoten in Form eines mehrstufigen B-Baums verwaltet.

**3.** Ein Datenverarbeitungssytem gemäß Anspruch 1 oder 2, das außerdem ein Mittel enthält, das die statistischen Informationen den jeweiligen Knoten zuordnet, wobei dieses Mittel eine Speicherstelle besitzt, an der die statistischen Informationen gespeichert werden, sowie einen Zeiger im betreffenden Knoten, der auf die Speicherstelle verweist.

**4.** Ein Datenverarbeitungssystem gemäß Anspruch 3, bei dem das Mittel zur Zuordnung der statistischen Informationen zu den entsprechenden Knoten eine Speicherstelle im betreffenden Knoten enthält, an der die statistischen Informationen gespeichert werden.

## Revendications

**1.** Système de traitement de données pour maintenir une structure d'accès de données qui facilite le traitement d'enquêtes statistiques relatives à des enregistrements de données emmagasinés dans ladite structure, le système comprenant :

un moyen pour maintenir, dans un dispositif d'emmagasinage de données, une pluralité de noeuds de données (par exemple 21), chacun emmagasinant un sous-ensemble des enregistrements de données, et une pluralité de noeuds d'accès (par exemple 23-28), chacun comportant un pointeur à, ou un identificateur d'un autre noeud d'accès ou noeud de données, chaque noeud d'accès étant relié directement ou indirectement à au moins un des noeuds de données,

un moyen pour maintenir des informations statistiques (SR1, SR2) associées auxdits noeuds d'accès et de données, les informations statistiques associées à un noeud d'accès concernant collectivement les enregistrements de données emmagasinés dans un ou plusieurs noeuds de données auxquels le noeud d'accès est directement ou indirectement relié ; ledit moyen pour maintenir comprenant un moyen de mise à jour sensible à un changement dans les enregistrements de données emmagasinés dans lesdits noeuds de données pour mettre à jour les informations statistiques qui y sont associées et pour mettre à jour les informations statistiques associées au noeud d'accès auquel les noeuds de données sont directement reliés ; caractérisé en ce que :

le moyen de mise à jour est sensible à un changement dans un enregistrement de données pour recalculer les informations statistiques qui y sont associées, et pour déterminer le changement de valeur des informations statistiques dudit noeud de données sélectionné provoqué par ledit changement dans un enregistrement de données, ledit moyen de mise à jour étant sensible à une détermination que ledit changement de valeur dépasse un seuil prédéterminé pour combiner lesdites informations statistiques recalculées du noeud de données avec les informations statistiques associées au noeud d'accès auquel ledit noeud de données est directement relié, mettant ainsi à jour lesdites informations statistiques du noeud d'accès sélectionné.

**2.** Système de traitement de données tel que revendiqué dans la revendication 1, dans lequel le moyen pour maintenir maintient les noeuds d'accès et de données sous la forme d'un arbre B multi-niveaux.

**3.** Système de traitement de données tel que revendiqué dans la revendication 1 ou 2, comprenant en outre un moyen pour associer les informations statistiques aux noeuds respectifs, ledit moyen ayant un emplacement emmagasinant les informations statistiques, et un pointeur dans le noeud respectif à l'emplacement d'emmagasinage.

4. Système de traitement de données tel que revendiqué dans la revendication 3, dans lequel le moyen pour associer les informations statistiques aux noeuds respectifs comprend un emplacement d'emmagasinage dans le noeud respectif pour les informations statistiques.

FIG. 1

FIG. 2

FIG. 3

STAT
‾‾‾

STAT-REC1 $\{n, S\}$

STAT-REC2 $\{n', S'\}$

ACC
‾‾‾

INDEX 1, POINTER 1
INDEX 2, POINTER 2

FIG. 4A

STAT
‾‾‾

STAT-REC1 $\{n, S\}$

STAT-REC2 $\{n', S'\}$

DATA
‾‾‾

$\{x_{11}, x_{21}, \quad \cdots \quad\}$
$\{x_{12}, x_{22}, \quad \cdots \quad\}$

$\{x_{1n}, x_{2n}, \quad \cdots \quad\}$

FIG. 4B

FIG. 5

PAGE 1

INDEX PAGE

PAGE 2

INDEX PAGE

PAGE 3

DATA PAGE

FIG. 6

PAGE 1

| $n_1$ | $S_1$ | " |
|---|---|---|

PAGE 2

| $n_2$ | $S_2$ | |
|---|---|---|
| $n_2'$ | $S_2'$ | |

FIG. 7

PAGE 4

| $n_4$ | $S_4$ | |
|---|---|---|
| $n_4'$ | $S_4'$ | |

PAGE 5

| $n_5$ | $S_5$ | |
|---|---|---|
| $n_5'$ | $S_5'$ | |